# EUROPEAN PATENT APPLICATION

(11) **EP 2 230 596 A1**
(43) Date of publication of application: **22.09.2010**
(21) Application number: 09176001.7
(22) Date of filing: 13.11.2009
(51) Int. Cl.: G06F 9/44

(54) **Methods and apparatus for use in selectively retrieving and displaying user interface information of a wireless peripheral device**

(30) Priority: 27.02.2009 US 156225 P
(71) Applicant: RESEARCH IN MOTION LIMITED, Waterloo, Ontario N2L 3W8 (CA)
(72) Inventor: Yach, David Paul, Waterloo Ontario N2L 3W8 (CA); Sauer, Jacob, Kitchener Ontario N2G 1K1 (CA)
(74) Representative: Fennell, Gareth Charles

(57) **Abstract**

A mobile communication device (e.g. a handheld telephone device) has a first wireless transceiver for communications via a wireless communication network and a second wireless transceiver for communications with a wireless peripheral device (e.g. a wireless audio headset or earpiece). The mobile device receives, from the wireless peripheral, an identification of a type or model of the wireless peripheral. The mobile device causes user interface (UI) function mapping information of the wireless peripheral to be selectively retrieved based on the received identification of the type or model. The UI function mapping information is indicative of a plurality of device functions assigned to a plurality of user input controls of the wireless peripheral. UI instruction information which is based on the retrieved UI function mapping information is then displayed at the mobile device. For example, when an incoming call is received, UI instruction information which identifies a first user input control for causing the incoming call to be answered and a second user input control for causing the incoming call to be ignored is displayed. The UI function mapping information may be selectively retrieved by transmitting, via the first wireless transceiver, a request which indicates the type or model of the wireless peripheral, for receipt by a server having different sets of UI function mapping information stored in association with a plurality of different types or models of wireless peripherals.

## Description

### BACKGROUND

### Field of the Technology

The present disclosure relates generally to wireless mobile communication devices which operate in wireless communication networks and interface with wireless peripheral devices.

### Description of the Related Art

A wireless mobile communication device, such as a mobile station, may be adapted to communicate via wireless radio frequency (RF) signals across a wireless communication network. For example, a mobile station may allow the placing and receiving of voice telephony calls via the wireless network, which may be a cellular telecommunications network or a wireless local area network (WLAN) operative in accordance with IEEE 802.11.

A user of the mobile station may utilize one or more external peripheral devices with the mobile station. For example, the mobile station may operate with a wireless peripheral device such as a wireless audio headset or earpiece (e.g. a BLUETOOTH® audio headset or earpiece, or the like). In many cases, these devices are small in size. Such a device may have only a few user input buttons, where each button is assigned to multiple functions, and may not carry a useful visual display of its own. Further, each different type or model of peripheral device has a different user interface configuration. Given the above, the user may have difficulty identifying or recalling the functions associated with its buttons.

### SUMMARY

In one illustrative example, a wireless mobile communication device (e.g. a handheld telephone device) of the present disclosure has a first wireless transceiver for communications via a wireless communication network and a second wireless transceiver for communications with a wireless peripheral device (e.g. a wireless audio headset or earpiece). The mobile device receives, from the wireless peripheral, an identification of a type or model of the wireless peripheral. The mobile device then causes user interface (UI) function mapping information of the wireless peripheral to be selectively retrieved based on the received identification of the type or model. The UI function mapping information is indicative of a plurality of device functions assigned to a plurality of user input controls of the wireless peripheral. UI instruction information which is based on the retrieved UI function mapping information is then displayed at the mobile device. The UI function information may be selectively retrieved by sending, via the first wireless transceiver, a request which indicates the type or model of the wireless peripheral, for receipt by a server having different sets of UI function mapping information stored in association with a plurality of different types or models of wireless peripherals. The mobile device receives, from the server, the proper UI function mapping information in response to the request.

### BRIEF DESCRIPTION OF THE DRAWINGS

Embodiments of present disclosure will now be described by way of example with reference to attached figures, wherein:
FIG. 1 is a block diagram which illustrates pertinent components of a communication system which includes a wireless communication network (such as a cellular telecommunications network) and a wireless mobile communication device (such as a mobile station);
FIG. 2 is a more detailed diagram of the wireless mobile communication device of FIG. 1;
FIG. 3 is a system structure which helps provide data-synchronized communications for the mobile communication device in the wireless communication network of FIGs. 1 and 2;
FIG. 4 is an illustrative example of a user interface of the mobile communication device of FIGs. 1 and 2;
FIG. 5 is an illustrative representation of memory of the mobile communication device which includes a plurality of applications stored therein;
FIG. 6 is another depiction of components of the communication system of FIGs. 1 and 3, further revealing that the mobile communication device operates to communicate with a wireless peripheral device via a short-range transceiver;
FIGs. 7A-7B is an illustration of a first wireless peripheral device (front and rear views) adapted for communications with the mobile communication device, where the first wireless peripheral device is of a first type or model and has a first user interface configuration;
FIGs. 8A-8B is an illustration of a second wireless peripheral device (front and rear views) adapted for communications with the mobile communication device, where the second wireless peripheral device is of a second type or model (different from the first type or model) and has a second user interface configuration;
FIG. 9 is an illustration of a third wireless peripheral device adapted for communications with the mobile communication device, where the third wireless peripheral device is of a third type or model (different from the first and the second types or models) and has a third user interface configuration;
FIG. 10 is a flowchart for describing a first part of a method in a mobile communication device for use in selectively retrieving and displaying user interface information of a wireless peripheral device;
FIG. 11 is a flowchart for describing a second part of the method for use in selectively retrieving and displaying user interface information of a wireless peripheral device;
FIG. 12 is the mobile communication device of FIG. 4 which displays user interface instruction information associated with the first wireless peripheral device of FIGs. 7A-7B;
FIG. 13 is the mobile communication device of FIG. 4 which displays user interface instruction information associated with the second wireless peripheral device of FIGs. 8A-8B; and
FIG. 14 is the mobile communication device of FIG. 4 which displays further user interface instruction information associated with the second wireless peripheral device of FIGs. 8A-8B.

### DETAILED DESCRIPTION OF THE EMBODIMENTS

In one illustrative example, a wireless mobile communication device (e.g. a handheld telephone device) has a first wireless transceiver for communications via a wireless communication network and a second wireless transceiver for communications with a wireless peripheral device (e.g. a wireless audio headset or earpiece). The mobile device receives, from the wireless peripheral, an identification of a type or model of the wireless peripheral. The mobile device then causes user interface (UI) function mapping information of the wireless peripheral to be selectively retrieved based on the received identification of the type or model. The UI function mapping information is indicative of a plurality of device functions assigned to a plurality of user input controls of the wireless peripheral. UI instruction information which is based on the retrieved UI function mapping information is then displayed at the mobile device. The UI function information may be selectively retrieved by sending, via the first wireless transceiver, a request which indicates the type or model of the wireless peripheral, for receipt by a server having different sets of UI function mapping information stored in association with a plurality of different types or models of wireless peripherals. The mobile device receives, from the server, the proper UI function mapping information in response to the request.

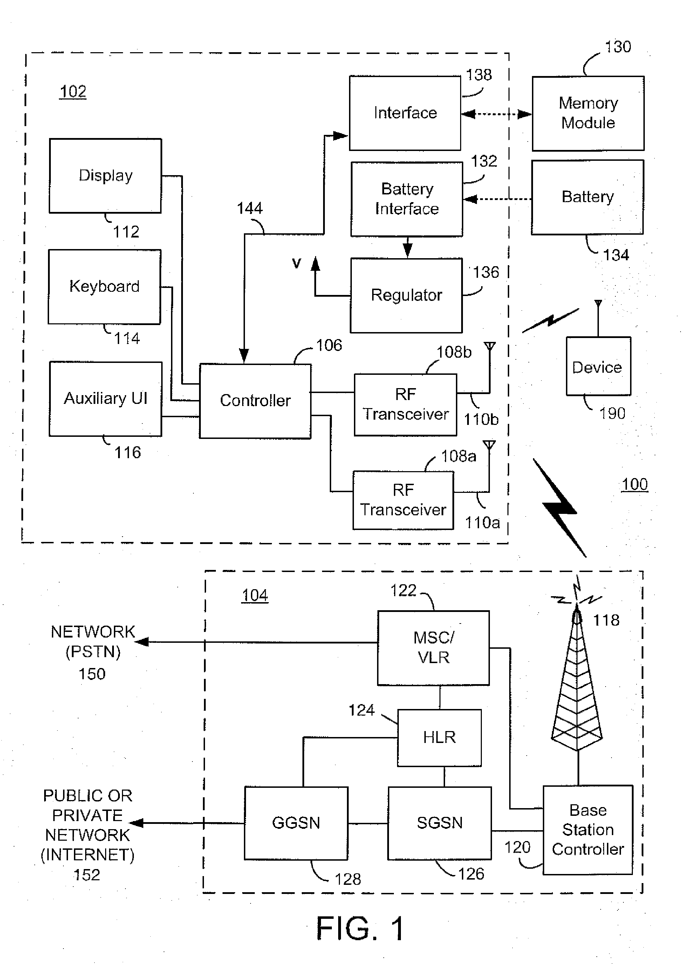

To illustrate one example environment, FIG. 1 is a block diagram of a communication system 100 which includes a wireless mobile communication device 102 (or "mobile communication device" or "mobile device"). Mobile device 102 is adapted to communicate with a wireless communication network 104 which may be a cellular telecommunications network. In this example, mobile device 102 is and may be referred to as a mobile station. For wireless communication with wireless network 104, mobile device 102 utilizes radio frequency (RF) transceiver circuitry 108a and an antenna 110a. Also as shown, mobile device 102 is adapted to communicate with a device 190 directly via short-range wireless communications. For wireless communication with device 190, mobile device 102 utilizes RF transceiver circuitry 108b and an antenna 110b for short-range communications.

RF transceiver 108b is a short-range wireless transceiver which may be operative in accordance with BLUETOOTH® standards (BLUETOOTH Specification Version 2.0, Volumes 1 and 2), for example. BLUETOOTH® is a registered trademark of Bluetooth SIG, Inc. Note that other types of short-range wireless transceivers may be utilized in lieu of BLUETOOTH types, such as Wi-Fi® (IEEE 802.11) type wireless transceivers or WiMAX® (IEEE 802.16e) type wireless transceivers. Wi-Fi® is a registered trademark of the Wi-Fi Alliance, and WiMAX® is a trademark of the WiMAX forum. Although shown in FIG. 1 as having separate and independent transceiver components, at least some portions or components of these otherwise different transceivers may be shared where possible.

Mobile device 102 includes a visual display 112, a keyboard 114, and perhaps one or more auxiliary user interfaces (UI) 116, each of which are coupled to a controller 106. Controller 106 is also coupled to radio frequency (RF) transceiver circuitry 108a and an antenna 110a. Typically, controller 106 is embodied as a central processing unit (CPU) which runs operating system software in a memory component (not shown). Controller 106 will normally control overall operation of mobile device 102, whereas signal processing operations associated with communication functions are typically performed in RF transceiver circuitry 108a. Controller 106 interfaces with device display 112 to display received information, stored information, user inputs, and the like. Keyboard 114, which may be a telephone type keypad or full alphanumeric keyboard, is normally provided for entering data for storage in mobile device 102, information for transmission to network 104, a telephone number to place a telephone call, commands to be executed on mobile device 102, and possibly other or different user inputs.

Mobile device 102 sends communication signals to and receives communication signals from network 104 over a wireless link via antenna 110a. RF transceiver circuitry 108a performs functions similar to those of a tower station 118 and a base station controller (BSC) 120 (discussed later below), including for example modulation/demodulation and possibly encoding/decoding and encryption/decryption. It is also contemplated that RF transceiver circuitry 108a may perform certain functions in addition to those performed by BSC 120. It will be apparent to those skilled in art that RF transceiver circuitry 108a will be adapted to particular wireless network or networks in which mobile device 102 is intended to operate. When mobile device 102 is fully operational, an RF transmitter of RF transceiver circuitry 108a is typically keyed or turned on only when it is sending to network, and is otherwise turned off to conserve resources. Similarly, an RF receiver of RF transceiver circuitry 108a is typically periodically turned off to conserve power until it is needed to receive signals or information (if at all) during designated time periods.

To receive power, mobile device 102 includes a battery interface 132 for receiving one or more rechargeable batteries 134. Battery 134 provides electrical power to electrical circuitry in mobile device 102, and battery interface 132 provides for a mechanical and electrical connection for battery 134. Battery interface 132 is coupled to a regulator 136 which provides a regulated voltage to electrical components of mobile device 102.

Mobile device 102 also operates using a memory module 130, such as a Subscriber Identity Module (SIM), which is connected to or inserted in mobile device 102 at an interface 138. Memory module 130 is one type of a conventional "smart card" used to identify an end user (or subscriber) of mobile device 102 and to personalize the device, among other things. With memory module 130, the mobile terminal is operational for communication through this particular wireless network 104. By inserting memory module 130 into mobile device 102, an end user can have access to any and all of his/her subscribed services. Memory module 130 generally includes a processor and memory for storing information. Since memory module 130 is coupled to interface 138, it is coupled to controller 106 through communication lines 144. In order to identify the subscriber, memory module 130 contains some user parameters such as an International Mobile Subscriber Identity (IMSI). An advantage of using memory module 130 is that end users are not necessarily bound by any single physical mobile device. Memory module 130 may store additional user information for the mobile device as well, including datebook (or calendar) information and recent call information. Note that memory module 130 may not be a SIM but alternatively may be a different type of a removable user identity module (e.g. an R-UIM), or alternatively may not be needed altogether depending on the network and device type.

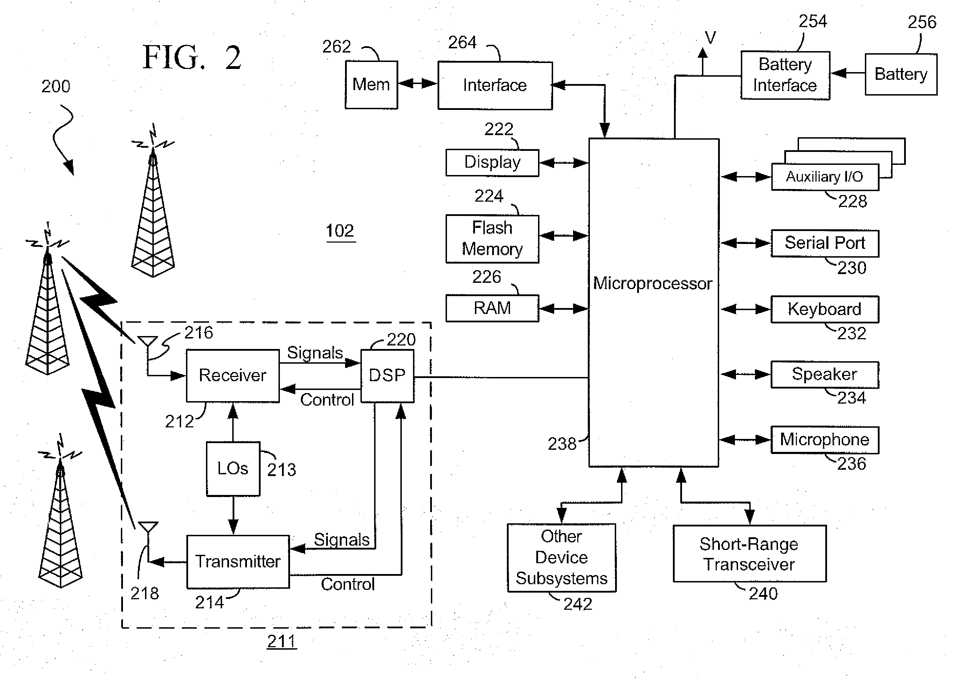

Mobile device 102 may consist of a single unit, such as a data communication device, a cellular telephone, a multiple-function communication device with data and voice communication capabilities, a personal digital assistant (PDA) enabled for wireless communication, or a computer incorporating an internal modem. Alternatively, mobile device 102 may be a multiple-module unit comprising a plurality of separate components, including but in no way limited to a computer or other device connected to a wireless modem. In particular, for example, in the mobile device block diagram of FIG. 1, RF transceiver circuitry 108a and antenna 110a may be implemented as a radio modem unit that may be inserted into a port on a laptop computer. In this case, the laptop computer would include display 112, keyboard 114, one or more auxiliary Uls 116, and controller 106 embodied as the computer's CPU. It is also contemplated that a computer or other equipment not normally capable of wireless communication may be adapted to connect to and effectively assume control of RF transceiver circuitry 108a and antenna 110a of a single-unit device such as one of those described above. Such a mobile device 102 may have a more particular implementation as described later in relation to FIG. 2.

Mobile device 102 communicates in and through wireless communication network 104. Wireless communication network 104 may be a cellular telecommunications network. In the embodiment of FIG. 1, wireless network 104 is configured in accordance with General Packet Radio Service (GPRS) and a Global Systems for Mobile (GSM) technologies. Wireless network 104 includes a base station controller (BSC) 120 with an associated tower station 118, a Mobile Switching Center (MSC) 122, a Home Location Register (HLR) 132, a Serving General Packet Radio Service (GPRS) Support Node (SGSN) 126, and a Gateway GPRS Support Node (GGSN) 128. MSC 122 is coupled to BSC 120 and to a landline network, such as a Public Switched Telephone Network (PSTN) 150. SGSN 126 is coupled to BSC 120 and to GGSN 128, which is in turn coupled to a public or private data network 152 (such as the Internet). HLR 124 is coupled to MSC 122, SGSN 126, and GGSN 128. Other types of cellular networks and cellular technologies may be employed as alternatives, as well as other types of wireless networks and technologies such as IEEE 802.11 type (Wi-Fi) networks/technologies or IEEE 802.16e type (WiMAX) technologies.

Tower station 118 is a fixed transceiver station, and station 118 and BSC 120 may be referred to as transceiver equipment. The transceiver equipment provides wireless network coverage for a particular coverage area commonly referred to as a "cell". The transceiver equipment transmits communication signals to and receives communication signals from mobile devices within its cell via station 118. The transceiver equipment normally performs such functions as modulation and possibly encoding and/or encryption of signals to be transmitted to the mobile device in accordance with particular, usually predetermined, communication protocols and parameters, under control of its controller. The transceiver equipment similarly demodulates and possibly decodes and decrypts, if necessary, any communication signals received from mobile device 102 within its cell. Communication protocols and parameters may vary between different networks. For example, one network may employ a different modulation scheme and operate at different frequencies than other networks.

The wireless link shown in communication system 100 of FIG. 1 represents one or more different channels, typically different radio frequency (RF) channels, and associated protocols used between wireless network 104 and mobile device 102. An RF channel is a limited resource that must be conserved, typically due to limits in overall bandwidth and a limited battery power of mobile device 102. Those skilled in art will appreciate that a wireless network in actual practice may include hundreds of cells, each served by a station 118 (i.e. or station sector), depending upon desired overall expanse of network coverage. All pertinent components may be connected by multiple switches and routers (not shown), controlled by multiple network controllers.

For all mobile device's 102 registered with a network operator, permanent data (such as mobile device 102 user's profile) as well as temporary data (such as mobile device's 102 current location) are stored in HLR 124. In case of a voice call to mobile device 102, HLR 124 is queried to determine the current location of mobile device 102. A Visitor Location Register (VLR) of MSC 122 is responsible for a group of location areas and stores the data of those mobile devices that are currently in its area of responsibility. This includes parts of the permanent mobile device data that have been transmitted from HLR 124 to the VLR for faster access. However, the VLR of MSC 122 may also assign and store local data, such as temporary identifications. Optionally, the VLR of MSC 122 can be enhanced for more efficient co-ordination of GPRS and non-GPRS services and functionality (e.g. paging for circuit-switched calls which can be performed more efficiently via SGSN 126, and combined GPRS and non-GPRS location updates).

Serving GPRS Support Node (SGSN) 126 is at the same hierarchical level as MSC 122 and keeps track of the individual locations of mobile devices. SGSN 126 also performs security functions and access control. Gateway GPRS Support Node (GGSN) 128 provides interworking with external packet-switched networks and is connected with SGSNs (such as SGSN 126) via an IP-based GPRS backbone network. SGSN 126 performs authentication and cipher setting procedures based on the same algorithms, keys, and criteria as in existing GSM. In conventional operation, cell selection may be performed autonomously by mobile device 102 or by the transceiver equipment instructing mobile device 102 to select a particular cell. Mobile device 102 informs wireless network 104 when it reselects another cell or group of cells, known as a routing area.

In order to access GPRS services, mobile device 102 first makes its presence known to wireless network 104 by performing what is known as a GPRS "attach". This operation establishes a logical link between mobile device 102 and SGSN 126 and makes mobile device 102 available to receive, for example, pages via SGSN, notifications of incoming GPRS data, or SMS messages over GPRS. In order to send and receive GPRS data, mobile device 102 assists in activating the packet data address that it wants to use. This operation makes mobile device 102 known to GGSN 128; interworking with external data networks can thereafter commence. User data may be transferred transparently between mobile device 102 and the external data networks using, for example, encapsulation and tunneling. Data packets are equipped with GPRS-specific protocol information and transferred between mobile device 102 and GGSN 128.

Those skilled in art will appreciate that a wireless network may be connected to other systems, possibly including other networks, not explicitly shown in FIG. 1. A network will normally be transmitting at very least some sort of paging and system information on an ongoing basis, even if there is no actual packet data exchanged. Although the network consists of many parts, these parts all work together to result in certain behaviours at the wireless link.

FIG. 2 is a more detailed block diagram of mobile device 102 of the present disclosure. In FIG. 2, mobile device 102 is a two-way communication device having voice and/or advanced data communication capabilities, which may include the capability to communicate with other computer systems. Depending on the functionality provided by mobile device 102, it may be referred to as a data messaging device, a two-way pager, a cellular telephone with data messaging capabilities, a wireless Internet appliance, or a data communication device (with or without telephony capabilities). Mobile device 102 may communicate with any one of a plurality of fixed transceiver stations 200 within its geographic coverage area.

Mobile device 102 will normally incorporate a communication subsystem 211, which includes a receiver 212, a transmitter 214, and associated components, such as one or more (e.g. embedded or internal) antenna elements 216 and 218, local oscillators (LOs) 213, and a processing module such as a digital signal processor (DSP) 220. Communication subsystem 211 is analogous to RF transceiver circuitry 108a and antenna 110a shown in FIG. 1. As will be apparent to those skilled in field of communications, particular design of communication subsystem 211 depends on the communication network in which mobile device 102 is intended to operate.

Mobile device 102 may send and receive communication signals over the network after required network registration or activation procedures have been completed. Signals received by antenna 216 through the network are input to receiver 212, which may perform such common receiver functions as signal amplification, frequency down conversion, filtering, channel selection, and like, and in example shown in FIG. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile device 102, and therefore mobile device 102 requires a Subscriber Identity Module or "SIM" card 262 (indicated in FIG. 2 as "mem" to denote one type of memory module) to be inserted in a SIM interface 264 in order to operate in the network. SIM 262 includes those features described in relation to FIG. 1. Again, note that SIM 262 may alternatively be a different type of a removable user identity module (e.g. an R-UIM), or alternatively may not be needed altogether depending on the network and device type.

Mobile device 102 is a battery-powered device so it also includes a battery interface 254 for receiving one or more rechargeable batteries 256. Such a battery 256 provides electrical power to most if not all electrical circuitry in mobile device 102, and battery interface 254 provides for a mechanical and electrical connection for it. The battery interface 254 is coupled to a regulator (not shown) which provides a regulated voltage V to all of the circuitry.

Mobile device 102 includes a microprocessor 238 (which is one implementation of controller 106 of FIG. 1) which controls overall operation of mobile device 102. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, enables execution of software applications on mobile device 102. A predetermined set of applications which control basic device operations, including at least data and voice communication applications, as well as techniques of the present disclosure, will normally be installed on mobile device 102 during its manufacture. An application that may be loaded onto mobile device 102 may be a personal information manager (PIM) application having the ability to organize and manage data items relating to user such as, but not limited to, e-mail, calendar events, voice mails, appointments, and task items. Naturally, one or more memory stores are available on mobile device 102 and SIM 256 to facilitate storage of PIM data items and other information.

The PIM application has the ability to send and receive data items via the wireless network. In one embodiment, PIM data items are seamlessly integrated, synchronized, and updated via the wireless network, with the mobile device user's corresponding data items stored and/or associated with a host computer system thereby creating a mirrored host computer on mobile device 102 with respect to such items. This is especially advantageous where the host computer system is the mobile device user's office computer system. Additional applications may also be loaded onto mobile device 102 through network, an auxiliary I/O subsystem 228, serial port 230, short-range communications subsystem 240, or any other suitable subsystem 242, and installed by a user in RAM 226 or a non-volatile store (not shown) for execution by microprocessor 238. Such flexibility in application installation increases the functionality of mobile device 102 and may provide enhanced on-device functions, communication-related functions, or both. For example, secure communication applications may enable electronic commerce functions and other such financial transactions to be performed using mobile device 102.

In a data communication mode, a received signal such as a text message, an e-mail message, or web page download will be processed by communication subsystem 211 and input to microprocessor 238. Microprocessor 238 will further process the signal for output to display 222 or alternatively to auxiliary I/O device 228. A user of mobile device 102 may also compose data items, such as e-mail messages, for example, using keyboard 232 in conjunction with display 222 and possibly auxiliary I/O device 228. Keyboard 232 is a complete alphanumeric keyboard and/or telephone-type keypad. These composed items may be transmitted over a communication network through communication subsystem 211. For voice communications, the overall operation of mobile device 102 is substantially similar, except that the received signals would be output to speaker 234 and signals for transmission would be generated by microphone 236. Alternative voice or audio I/O subsystems, such as a voice message recording subsystem, may also be implemented on mobile device 102. Although voice or audio signal output is accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile device 102 by providing for information or software downloads to mobile device 102 other than through a wireless communication network. The alternate download path may, for example, be used to load an encryption key onto mobile device 102 through a direct and thus reliable and trusted connection to thereby provide secure device communication.

Short-range wireless transceiver 240 of FIG. 2 is an additional component which provides for short-range wireless communication between mobile device 102 and different systems or devices. Short-range wireless transceiver 240 is operative in accordance with BLUETOOTH standards (BLUETOOTH Specification Version 2.0, Volumes 1 and 2), for example. The communication protocol utilized may be any suitable protocol, such as OBEX (OBject Exchange) which is designed for swapping binary objects between particular devices. OBEX is designed to function like Hypertext Transfer Protocol (HTTP), as it allows the device to connect to a server in much the same way. Once connected to a server, the device can either make a request or provide objects to OBEX. Note that other types of short-range wireless transceivers may be utilized in lieu of BLUETOOTH types, such as Wi-Fi (IEEE 802.11) type wireless transceivers or WiMAX (IEEE 802.16e) type wireless transceivers.

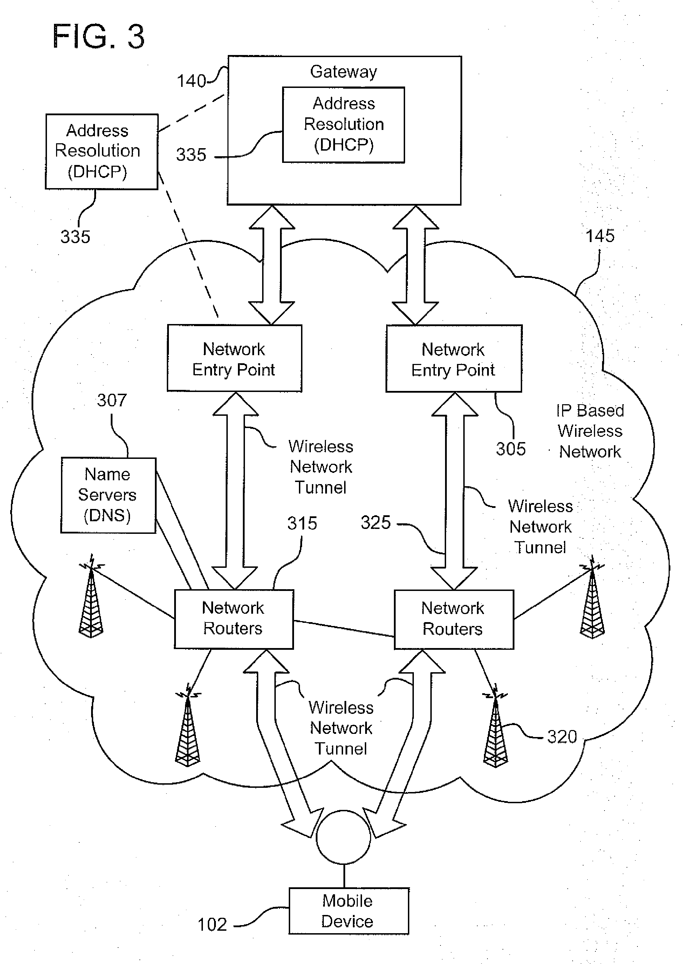

FIG. 3 shows a system structure which helps provide data communication services for a mobile communication device via a wireless communication network. In particular, FIG. 3 shows basic components of an IP-based wireless data network which may be utilized for facilitating data-synchronized communications. Mobile device 102 communicates via a wireless packet data network 145 and may also be capable of communicating via a wireless voice network (not shown). According to the present disclosure, mobile device 102 is operative to maintain data synchronization with a host server (present via a gateway 140) over wireless packet data network 145 for user data of an application program associated with a user account.

As shown in FIG. 3, gateway 140 may be coupled to an internal or external address resolution component 335 and one or more network entry points 305. Data packets are transmitted from gateway 140, which is a source of information to be transmitted to mobile device 102 (e.g. the host server), through wireless packet data network 145 by setting up a wireless network tunnel 325 from gateway 140 to mobile device 102. In order to create this wireless tunnel 325, a unique network address is associated with mobile device 102. In an IP-based wireless network, however, network addresses are typically not permanently assigned to a particular mobile device 102 but instead are dynamically allocated on an as-needed basis. Thus, mobile device 102 may acquire a network address and for gateway 140 to determine this address so as to establish wireless tunnel 325.

Network entry point 305 is generally used to multiplex and demultiplex communications amongst many gateways, corporate servers, and bulk connections such as the Internet, for example. There are normally very few of these network entry points 305, since they are also intended to centralize externally available wireless network services. Network entry points 305 often use some form of an address resolution component 335 that assists in address assignment and lookup between gateways and mobile devices. In this example, address resolution component 335 is shown as a dynamic host configuration protocol (DHCP) as one method for providing an address resolution mechanism.

A central internal component of wireless packet data network 145 is a network router 315. Normally, network routers 315 are proprietary to the particular network, but they may alternatively be constructed from standard commercially available hardware. The purpose of network routers 315 is to centralize numerous fixed transceiver stations 320 normally implemented in a relatively large network into a central location for a long-haul connection back to network entry point 305. In some networks there may be multiple tiers of network routers 315 and cases where there are master and slave network routers 315, but the functions are similar. Often network router 315 will access a name server 307, in this case shown as a Domain Name System (DNS) server 307 as used in the Internet, to look up destinations for routing data messages. Fixed transceiver stations 320, as described above, provide wireless links to mobile devices such as mobile device 102.

Wireless network tunnels such as a wireless tunnel 325 are opened across wireless packet data network 145 in order to allocate necessary memory, routing, and address resources to deliver IP packets. Such tunnels 325 are established as part of what are referred to as Packet Data Protocol or "PDP contexts" (i.e. data sessions). To open wireless tunnel 325, mobile device 102 must use a specific technique associated with wireless packet data network 145. The step of opening such a wireless tunnel 325 may require mobile device 102 to indicate the domain, or network entry point 305 with which it wishes to open wireless tunnel 325. In this example, the tunnel first reaches network router 315 which uses name server 307 to determine which network entry point 305 matches the domain provided. Multiple wireless tunnels can be opened from one mobile device 102 for redundancy, or to access different gateways and services on the network. Once the match is found, the tunnel is then extended to network entry point 305 and resources are allocated at each of the nodes along the way. Network entry point 305 then uses the address resolution (or DHCP 335) component to allocate an IP address for mobile device 102. When an IP address has been allocated to mobile device 102 and communicated to gateway 140, information can then be forwarded from gateway 140 to mobile device 102.

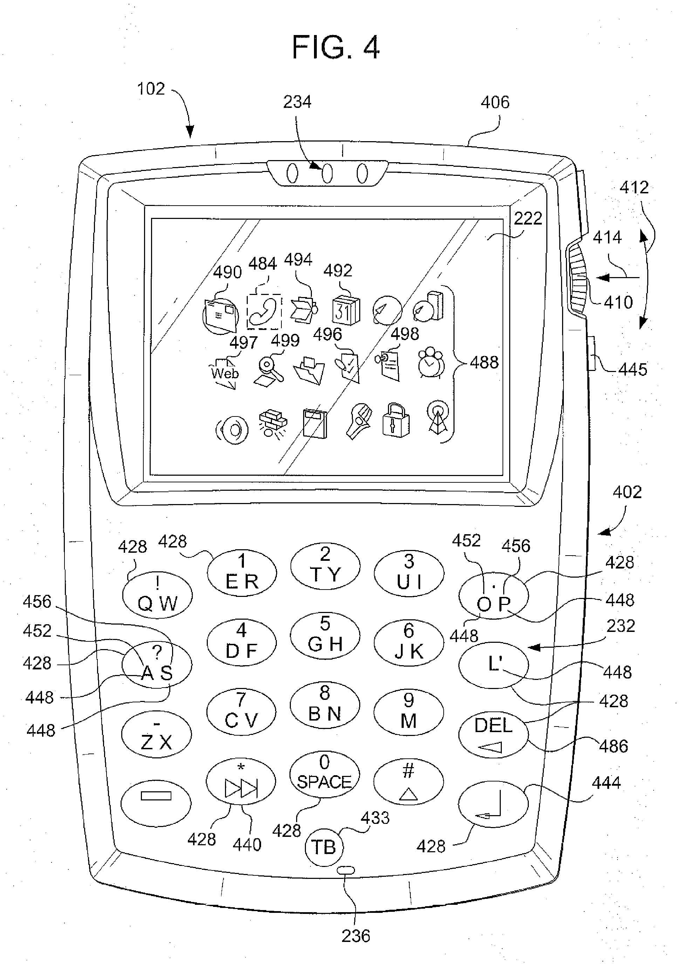

Referring now to FIG. 4, what is shown is an illustrative representation of an example user interface 402 of mobile device 102 which includes at least display 222, keyboard 232, speaker 234, microphone 236, and a cursor or view positioning mechanism such as a positioning wheel 410 (e.g. a scrollwheel) or a trackball 433. Although shown enlarged in FIG. 4 for clarity, this mobile device 102 is sized to be a handheld portable device. As an alternative to or in addition to positioning wheel 410 and/or trackball 433, a wide range of one or more pointing or cursor/view positioning mechanisms such as a touch pad, a joystick button, a mouse, a touchscreen, a tablet, or other whether presently known or unknown, may be employed. The cursor may be or include a pointer, a movable item or other visual cue used to mark a position or point to another item on a display, in order to, for example, indicate position for data entry or for selection of the other item.

Keys 428 of keyboard 232 are disposed on a front face of a housing 406 and positioning wheel 410 is disposed at a side of housing 406. Keyboard 232 is in the example form of a reduced QWERTY keyboard including a plurality of keys 428 that serve as input members. It can be seen that the arrangement of the characters 448 on keys 428 of keyboard 424 is generally of the QWERTY arrangement, albeit with many of keys 428 including two of characters 448. In the example depiction of keyboard 424, many of keys 428 include two characters, such as including a first character 452 and a second character 456 assigned thereto. Characters may include letters, digits, symbols and the like and can additionally include ideographic characters, components thereof, and the like. One of keys 428 of keyboard 424 includes as the characters 448 thereof the letters "Q" and "W", and an adjacent key 428 includes as the characters 448 thereof the letters "E" and "R". Keyboard 424 may be of other configurations, such as an AZERTY keyboard, a QWERTZ keyboard, a Dvorak keyboard, or other keyboard or keypad arrangement, and either reduced or not reduced (i.e. full). In a "full" or non-reduced keyboard or keypad arrangement, each key has a single letter (not multiple letters) of the alphabet assigned to it.

Among keys 428 of keyboard 232 are a <NEXT> key 440 and an <ENTER> key 444. The <NEXT> key 440, wherein, for example, "<NEXT>" may be a symbol or may be the word "next" provided (e.g. printed) on the key, may be pressed to provide a selection input to the processor and provides substantially the same selection input as is provided by a rotational input of positioning wheel 410. Since <NEXT> key 440 is provided adjacent a number of other keys 428 of keyboard 232, the user can provide a selection input to the processor substantially without moving the user's hands away from the keyboard 232 during a text entry operation. Another key, the <ESC> key 445 is disposed on the side of housing 406 adjacent positioning wheel 438, although the same or similar key may be disposed as part of keyboard 232. Among keys 428 of the keyboard 424 additionally is a <DEL> key 486 that can be provided to delete a text entry.

Positioning wheel 410 may serve as another input member and is both rotatable, as is indicated by an arrow 412, to provide selection inputs to the processor, and also can be pressed in a direction generally toward housing 406, as is indicated by an arrow 414 to provide another selection input to the processor.

Display 222 may include a cursor 484 that depicts generally where the next input or selection from user interface 402 will be received. Display 222 is shown in FIG. 4 as displaying a home screen that represents a number of applications 586 (Figure 3 shows some of the example possible applications 86) depicted as corresponding discrete icons 488. Icons 488 include, for example, an Electronic Mail (E-Mail) icon 490, a Calendar icon 492, an Address Book icon 494, a Tasks icon 496, a Messages icon 497, a MemoPad icon 498, and a Search icon 499, respectively.

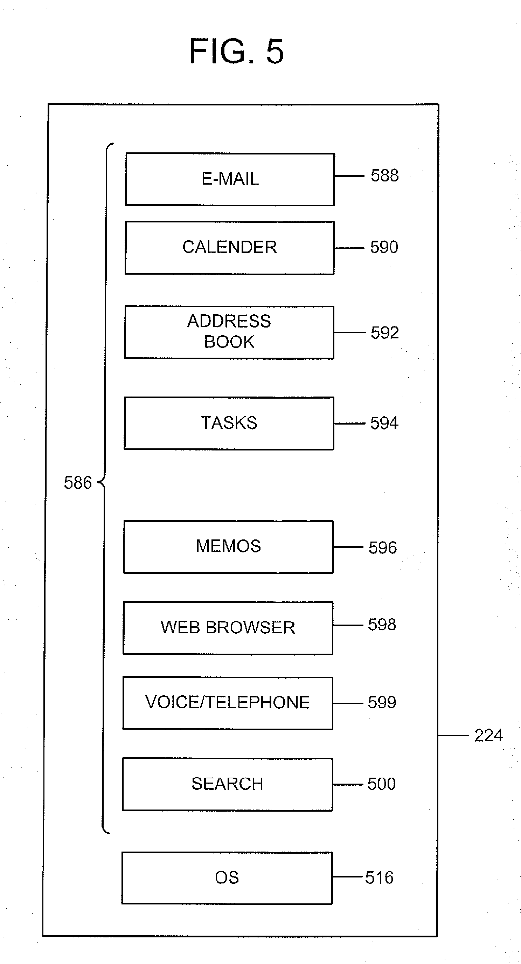

As shown further in FIG. 5, memory 224 of the mobile device includes a plurality of applications or routines 586 associated with the visually displayed icons 488 of FIG. 4 for the processing of data. Applications 586 may be in any of a variety of forms such as, without limitation, software, firmware, and the like. Applications 586 include, for example, an Electronic Mail (E-Mail) application 588 (FIG. 5) associated with E-mail icon 490 (FIG. 4), a Calendar application 590 (FIG. 5) associated with Calendar icon 492 (FIG. 4), an Address Book application 592 (FIG. 5) associated with Address Book icon 494 (FIG. 4), a Tasks application 594 (FIG. 5) associated with Tasks icon 496 (FIG. 4), a MemoPad (Memos) application 596 (FIG. 5) associated with MemoPad icon 498, a Web Browser application 598 (FIG. 5) associated with Web Browser icon 497 (FIG. 4), a Voice/Telephone application 599 (FIG. 5) associated with Voice/Telephone icon 484, and a Search application 500 (FIG. 5) associated with Search icon 499 (FIG. 4). An operating system (OS) program 516 also resides in memory 224.

In FIG. 4, the "home" screen output is shown as currently active and constitutes the main "ribbon" application for displaying the icons 488 shown. An application, such as E-mail application 588 of FIG. 5, may then be initiated (opened or viewed) from user interface 402 by providing a suitable user input to it. For example, E-mail application 588 may be initiated (opened or viewed) by rotating positioning wheel 410 to highlight E-mail icon 490 and providing a selection input by translating positioning wheel 410 in the direction indicated by arrow 438. As another example, display 222 displays icon 499 associated with Search application 500 and accepts input from positioning wheel 410 to initiate a search from that icon 499. Applications 586 may be additionally or alternatively initiated (opened or viewed) from user interface 402 by providing another suitable input to it, such as by suitably rotating or "rolling" trackball 433 and providing a selection input by, for example, pushing the trackball 433 (e.g. somewhat similar to positioning wheel 410 except into the plane of FIG. 4).

Movement, navigation, and/or scrolling with use of a cursor/view positioning mechanism is beneficial given the relatively large size of visually displayed information and the compact size of display 222 of FIG. 4, and since information and messages are typically only partially presented in the limited view of display 222 at any given moment. As previously described, positioning wheel 410 is one helpful cursor/view positioning mechanism to achieve such movement. Positioning wheel 410, which may be referred to as a scrollwheel, specifically includes a circular disc which is rotatable about a fixed axis of housing 302 and may be rotated by the end user's index finger or thumb. When the information or message is being partially displayed, an upwards rotation of positioning wheel 410 causes an upwards scrolling such that display 222 presents viewing of an upper portion of the information or message. Similarly, a downwards rotation of positioning wheel 410 causes a downwards scrolling such that display 222 presents viewing of a lower portion of the information or message. Positioning wheel 410 is mounted along a fixed linear axis such that the end user can depress positioning wheel 410 inwards toward housing 406 (e.g. with the end user's index finger or thumb) for selection of information. Again, see the direction indicated by an arrow 414 of positioning wheel 410 shown.

Although a specific mobile device 102 has just been described, any suitable mobile communication device or terminal may be part of the methods and apparatus which will be described in fuller detail below. Note that many components of mobile device 102 shown and described may not be included (e.g. a full QWERTY keypad may be optional).

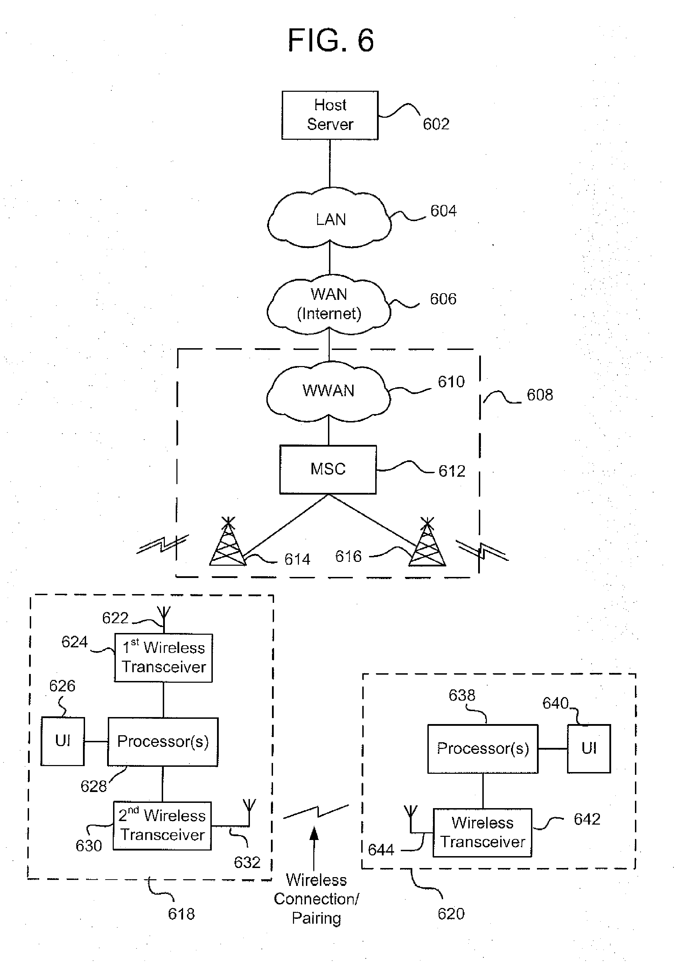

FIG. 6 is a more simplified view of relevant components in the system of FIGs. 1-3 for discussion. The system of FIG. 6 is shown to include a host server 602, a local area network 604 (e.g. a private communication network of an enterprise or corporation), a wide area network 606 such as the Internet, a wireless communication network 608 (e.g. a cellular telecommunications network or wireless packet data network), a mobile device 618, and a wireless peripheral device 620.

In addition to its operations with wireless network 608, mobile device 618 operates to communicate with a wireless peripheral device 620 over a wireless link. As shown, mobile device 618 includes one or more processors 628, a user interface 626 coupled to the one or more processors 628, a first wireless transceiver 624 and antenna 622 for communicating through base stations 614 and 616 of the wireless network 608, and a second wireless transceiver 630 and antenna 632. Mobile device 618 may be the same or similar device as mobile device 102 described in relation to FIGs. 1-5 above.

Wireless peripheral device 620 includes one or more processors 638, a user interface 640 coupled to the one or more processors 638, and a wireless transceiver 642 and antenna 644. Wireless peripheral device 620 may not have any wireless transceiver or antenna for communicating through base stations 614 and 616 of wireless network 608. Wireless peripheral device 620 may have a user interface 640 without any visual display. Wireless peripheral device 620 may be, for example, a wireless audio headset or earpiece (e.g. a BLUETOOTH audio headset or earpiece, or the like).

Wireless transceivers 630 and 642 of these devices 102 and 620 are short-range wireless transceivers, through which a connection or communication session may be established and maintained for communications. By "short-range", it is meant a distance within a range of 0 - 100 meters, for example. In one embodiment, these short-range wireless transceivers 630 and 642 are operative in accordance with BLUETOOTH standards. The BLUETOOTH standards may be based on BLUETOOTH Specification Version 2.0, Volumes 1 and 2, for example. The communication protocol utilized may be any suitable protocol, such as OBEX (OBject EXchange) which is designed for swapping binary objects between particular devices. OBEX is designed to function like Hypertext Transfer Protocol (HTTP), as it allows the device to connect to a server in much the same way. Once connected to a server, the device can either make a request or provide objects to OBEX. Note that other types of short-range wireless transceivers may be utilized in lieu of BLUETOOTH types, such as Wi-Fi (IEEE 802.11) type wireless transceivers or WIMAX (IEEE 802.16e) type wireless transceivers.

Note that a user of the mobile device may utilize any one of a number of different peripheral devices with the mobile device. FIGs. 7A-7A, 8A-8B, and 9 are three examples of different wireless peripheral devices 700, 800, and 900 with which a mobile device may operate. In many cases, the peripheral devices are small in size. Such a device may have only a few user input buttons, where each button is assigned to multiple functions, and may not carry a useful visual display of its own. Further, each different type or model of peripheral device has a different user interface configuration. Given the above, the user may have difficulty identifying or recalling the functions associated with its buttons or other input controls.

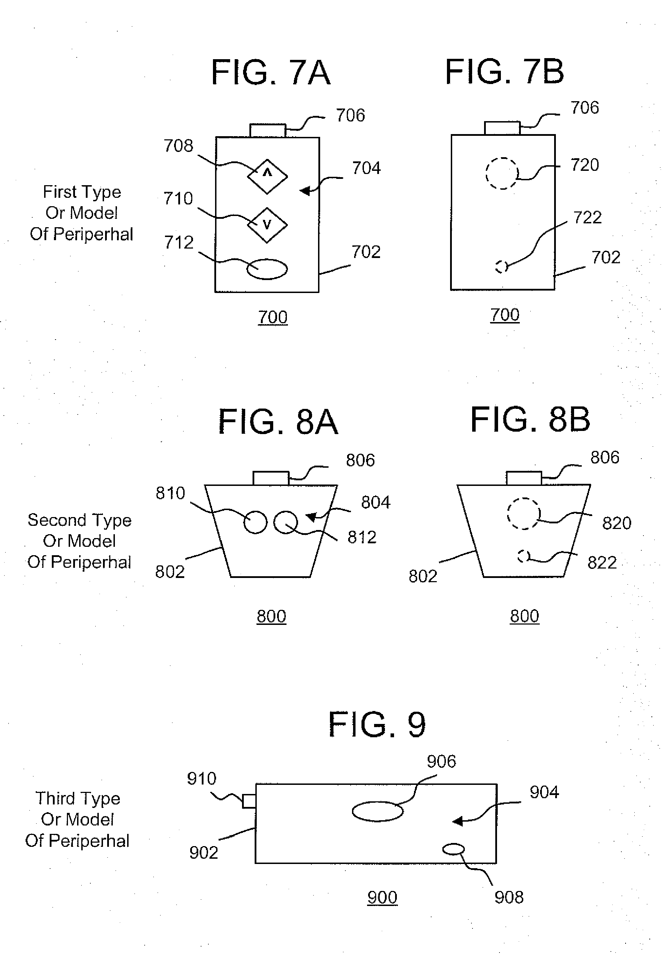

More particular, FIGs. 7A-7B reveal front and rear views of wireless peripheral device 700, which is one example of wireless peripheral device 620 of FIG. 6. In FIG. 7A, it is shown that wireless peripheral device 700 includes a housing 702 and one or more user input controls 704 carried on housing 702. User input controls 704 may be buttons or keys, or any other suitable input mechanisms. In this example, the number of user input controls 704 is three (3), which include user input controls 708, 710, and 712. A plurality of device functions are assigned to user input controls 708, 710, and 712; these functions are assigned internally in device memory (i.e. mobile or peripheral device) in a mapping. The user interface of wireless peripheral device 700 is without a visual display.

In this example, wireless peripheral device 700 is an audio headset or earpiece of a particular type or model. Being an audio headset or earpiece, wireless peripheral device 700 includes a speaker 720 and a microphone 722 (FIG. 7B) carried in housing 702. Wireless peripheral device 700 is operative to receive wireless signals from the mobile device and to obtain audio signals therefrom which are output from speaker 720. In addition, wireless peripheral device 700 is operative to receive audio signals from microphone 722 and transmit wireless signals which carry the audio signals to the mobile device. Note that wireless peripheral device 700 may further include an attachment mechanism 706 carried on housing 702 which is adapted to attach on or around a part of the user (e.g. head or ear) or the user's clothing (shirt or shirt collar).

FIGs. 8A-8B are front and rear views of wireless peripheral device 800, which is another example of wireless peripheral device 620 of FIG. 6. In FIG. 8A, it is shown that wireless peripheral device 800 includes a housing 802 and one or more user input controls 804 carried on housing 802. Like wireless peripheral device 700 of FIGs. 7A-7B, in this example, wireless peripheral device 800 is an audio headset or earpiece. However, wireless peripheral device 800 is a different type or model than that of wireless peripheral device 700. It has a different user interface configuration than wireless peripheral device 700 (compare FIGs. 8A-8B with FIGs. 7A-7B). In this example, the number of user input controls 804 of wireless peripheral device 800 is two (2), which include user input controls 810 and 812. A plurality of device functions are assigned to user input controls 810 and 812; these functions are assigned internally in the device memory (i.e. mobile or peripheral device) in a mapping. The user interface of wireless peripheral device 800 is without a visual display.

Being an audio headset or earpiece, wireless peripheral device 800 includes a speaker 820 and a microphone 822 (FIG. 8B) carried in housing 802. Wireless peripheral device 800 is operative to receive wireless signals from the mobile device and to obtain audio signals therefrom which are output from speaker 820. In addition, wireless peripheral device 800 is operative to receive audio signals from microphone 822 and transmit wireless signals which carry the audio signals to the mobile device. Note that an attachment mechanism 806 which may be carried on housing 802 is adapted to attach on or around a part of the user (e.g. head or ear) or the user's clothing (shirt or shirt collar).

Again, although wireless peripheral devices 700 and 800 are both audio headsets or earpieces, they are different types or models, and/or from different manufacturers. To illustrate, FIGs. 7A-7B and 8A-8B reveal that housing 702 has a different shape and/or size than housing 802. In addition, the number, layout, or configuration (or combinations thereof) of user input controls 704 is different from the number, layout, configuration of user input controls 804. Further, the assignment of device functions to user input controls 708, 710, and 712 is different from the assignment of device functions to user input controls 810 and 812.

FIG. 9 is a wireless peripheral device 900, which is yet another example of a wireless peripheral device 620 of FIG. 6. In FIG. 9, it is shown that wireless peripheral device 900 includes a housing 902 and one or more user input controls 904 carried on housing 902. In this example, the number of user input controls 904 is two (2), which include user input controls 906 and 908. One or more device functions are assigned to user input controls 904; these functions are assigned internally in the device memory (i.e. mobile or peripheral device) in a mapping. The user interface of wireless peripheral device 900 is without a visual display.

In this example, wireless peripheral device 900 is an audio relay device of a particular type or model. Being an audio relay device, wireless peripheral device 900 has an electrical interface 910 for electrically connecting to an audio device (e.g. a stereo, a CD player, a DVD player, etc.). Wireless peripheral device 900 may also have an electrical cord and plug for receiving electrical power from an AC electrical outlet. Wireless peripheral device 900 operates to receive audio signals, via interface 910, and relay them over the wireless link to the mobile device, so that the mobile device may output the audio signals (e.g. music) to its speaker.

Other suitable devices are possible as well, including a wireless car kit (e.g. a wireless hands-free car unit).

Note that each wireless peripheral device 700, 800, and 900 is adapted to detect each one of a plurality of predetermined user interactions with one or more of its user input controls, and cause a selected one of a plurality of functions to be performed in response to detecting a corresponding one of the predetermined user interactions with the one or more of the user input controls. The appropriate function is selected and performed according to a stored mapping that associates each user interaction (or user input control) with each function. In general, a wireless peripheral device may cause the function to be performed by sending, to the mobile device, a message having an indication of the detected user interaction or user input control (i.e. where the mobile device stores the mapping). Alternatively, the wireless peripheral device may cause the function to be performed by sending, to the mobile device, a message having a selected command corresponding to the function (i.e. where the peripheral stores the mapping).

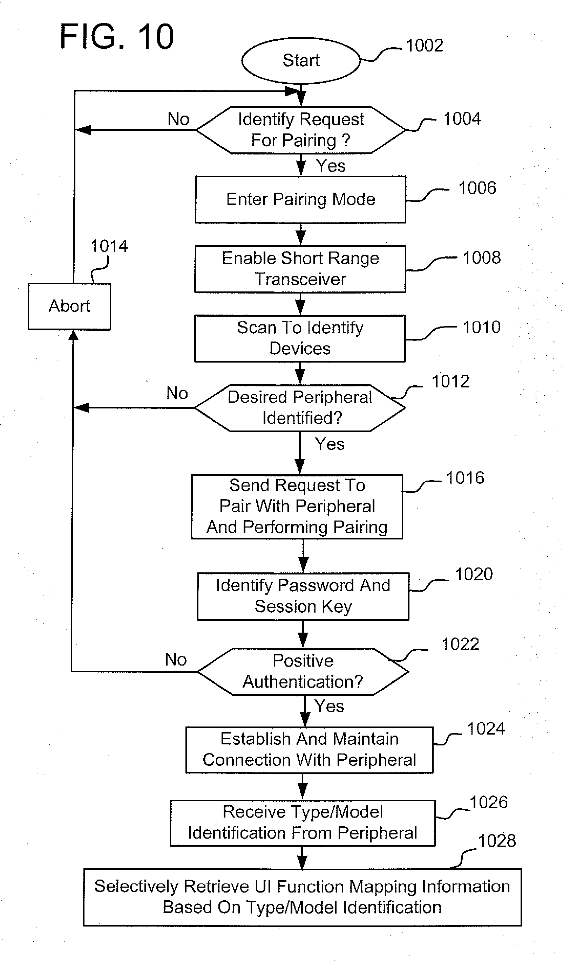

FIG. 10 is a flowchart for describing a first part of a method in a mobile communication device for use in selectively retrieving and displaying user interface (UI) information of a wireless peripheral device. The techniques described in relation to the flowchart may be performed by one or more processors (e.g. controller 108 of FIG. 1, microprocessor 238 of FIG. 2) of the mobile device (e.g. mobile device 102 of FIGs. 1-5, mobile device 618 of FIG. 6). A computer program product which may embody the technique may include a computer readable medium having computer instructions stored therein which are executable by the one or more processors for performing the technique.

Beginning at a start block 1002 of FIG. 10, the processor of the mobile device identifies whether a request for pairing is received from the end user via its user interface (step 1004 of FIG. 10). If not, the processor continues monitoring for such request. When such request is received as identified at step 1004, then the mobile device enters into a pairing mode (step 1006 of FIG. 10). For this mode of operation, the processor may cause a prompt to be displayed in the visual display which instructs the end user to locate the mobile device within coverage range of the wireless peripheral device. The processor further causes its short-range wireless transceiver to be enabled if previously disabled (step 1008 of FIG. 10). Once the transceiver is stabilized, the processor utilizes the short-range wireless transceiver to scan to identify one or more devices within its coverage region (step 1010 of FIG. 10).

The processor causes a list of one or more identifiers corresponding to the one or more identified devices from the scanning operation to be displayed in its visual display. The list of identifiers is displayed with a prompt for the end user to select one of the devices for pairing. An identifier corresponding to the wireless peripheral device of the end user will be displayed in this list, assuming that that device is located nearby as it should be. If the wireless peripheral device is identified by the end user in the visual display and selected via the user interface (step 1012 of FIG. 10), the processor detects this selection and sends a request via the short-range wireless transceiver to pair with the wireless peripheral device corresponding to the selection for communications (step 1016 of FIG. 10). The wireless peripheral device receives this request through its short-range wireless transceiver and responds appropriately to cause the communications pairing to occur, assuming that conditions are suitable. If the wireless peripheral device is not identified in step 1012, the process may be aborted (step 1014 of FIG. 10).

In one embodiment, the pairing process of step 1016 requires a passkey exchange and validation for authentication (step 1022 of FIG. 10), as well as to provide a secure wireless connection. The wireless peripheral device may have the passkey stored in its memory. If there is an error in the pairing process (e.g. if the passkeys fail to match), then the process may be aborted in step 1014 of FIG. 10. In an alternative embodiment, no passkey exchange and validation is performed for the device pairing.

After positive authentication in step 1022 of FIG. 10, the mobile device is successfully paired with the wireless peripheral device, where a connection is established and maintained for communications (step 1024 of FIG. 10). This connection is utilized for communications between the devices, such as communications for controlling device functions, communication of audio signals, etc.

The mobile device may then receive an identification of a "type" or "model" of the wireless peripheral device (step 1026 of FIG. 10). This identification may uniquely identify the type or model of the wireless peripheral device, or both, and/or be unique to the device's user interface. Note that this identification information may alternatively be requested and received by the mobile device at the time of scanning in step 1008.

For example, a mobile device may receive, upon request, information such as device name, device class, a list of services, and technical information; the technical information may include device features, manufacturer name, specification utilized, and clock offset. Any mobile device may perform an inquiry to find other devices to connect to, and any device may be configured to respond to such inquiries. If the mobile device attempting to connect has the address of the peripheral, the peripheral may respond to such "direct" connection request by transmitting the information upon is requested. Such mobile device may operate in accordance with Bluetooth standards.

Thereafter, the mobile device selectively retrieves user interface (UI) function mapping information of the wireless peripheral device based on the received identification of the type or the model (step 1028 of FIG. 10). The UI function mapping information is indicative of a plurality of device functions assigned to the plurality of user input controls of the wireless peripheral device. After the information is received, the mobile device stores this UI function mapping information in association with an identification of the wireless peripheral device or its pairing. For example, the mobile device may store this information in association with the pairing in a permanent or semi-permanent fashion, such that when the mobile device is powered off, the information is retained.

The information may be a mapping between the device functions and the user input controls. Such stored mapping or association may be in the form of a data table, for example, and the device functions and user input controls may be represented by different names, numbers, or codes. In addition, or alternatively, the information may be display/image data for visual rendering of the mapping, which may be in the form of images or the like. Other data forms may be utilized as well, such as recorded audible/voice data for audible/voice output at the speaker of the mobile device.

In one embodiment, the mobile device stores a plurality of different stored UI function mappings in its memory, where each mapping is associated with one of a plurality of identifications of types or models (which may represent many or all possible types or models of wireless peripheral devices). This stored association may be in the form of a data table, for example, where the mappings and the identifications of types or models are represented by different names, numbers, or codes. In this case, the mobile device selectively retrieves in step 1028 the proper UI function mapping information from its memory using the received identification of the type or model of the connected peripheral.

In another embodiment, the mobile device selectively retrieves this information by causing a request to be sent to a server via the wireless communication network. The request indicates the type or the model of the connected wireless peripheral device (e.g. the type or the model identification). Here, the server stores and maintains the plurality of different stored UI function mappings in memory, where each mapping is associated with one of the plurality of identifications of types or models. The multiple identifications of types or models may represent many or all possible types or models of wireless peripheral devices. When new types and/or models of wireless peripheral devices become available, updates to the server may be made so that it includes new UI function mappings corresponding to the new types and/or models. This stored association may be in the form of a data table, for example, where the mappings and the identifications of types or models are represented by different names, numbers, or codes. The mobile device may send the request with the type or model to the server in step 1028 and, in response, the server selectively retrieves the proper UI function mapping information from its memory using the received identification of the type or model. Servicing the request, the server sends back the selected UI function mapping information to the mobile device which receives it. If the information involves display/image data for visual rendering of the mapping, the mobile device may receive the image files directly from the server, or receive display/image data for constructing or rendering images at the mobile device.

In yet another embodiment, the same server-side technique as the immediately-preceding described technique is utilized, but where the different UI function mappings are stored in a distributed fashion across different servers. Each different server is identified by a different address and/or path through which the mobile device may obtain the information. The mobile device stores or maintains a plurality of different addresses or paths to these different servers in its memory, where each address or path is associated with a corresponding one of the plurality of identifications of types or models. These multiple identifications of types or models may represent many or all possible types or models of wireless peripheral devices. When new types and/or models of wireless peripheral devices become available, updates to the server may be made so that it includes new UI function mappings corresponding to the new types and/or models. In this case, the mobile device sends the request to a selected one of the plurality of different servers via the wireless communication network.

Thus, one particular advantage of using the server is that updates may be made to include the new UI function mappings corresponding to the new types and/or models of wireless peripheral devices, so that the mobile device has access to the new UI function mappings of the new types and/or models.

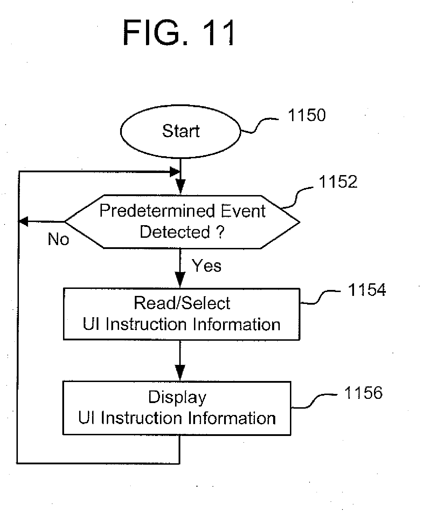

Sometime after the mobile device receives the UI function mapping information corresponding to the connected wireless peripheral device, the mobile device causes UI instruction information which is based on the UI function mapping information to be visually displayed in its display. Such displaying is described in more detail in relation to FIG. 11, as well as FIGs. 12-14, below. In general, the UI instruction information may be displayed upon connection with the wireless peripheral device, upon receipt of the UI function mapping information, or upon detection of other predetermined event(s) as described below.

The UI instruction information may differ from the UI function mapping information in that it may represent only a part of all of the UI function mapping information, as appropriate or needed at any given time at the mobile device. In addition, or alternatively, the UI instruction information may differ from the UI function mapping information in that it may be in a suitable form for output (visual images, audible signals) at the mobile device which is different from the received data.

Note that the technique of FIG. 10 may be performed a number of different times for each different wireless peripheral device which has been connected or paired with the mobile device. As the mobile device may permanently or semi-permanently store UI function mapping information in association with each device identification or pairing, the appropriate UI function mapping information or its corresponding UI instruction information may be directly and immediately selected from the memory of the mobile device upon subsequent connections or pairings with the same wireless peripheral device or its type/model (and without any further requests made to any server).

FIG. 11 is a flowchart for describing a second part of the method for use in selectively retrieving and displaying user interface (UI) information of a wireless peripheral device. The techniques described in relation to the flowchart may be performed by one or more processors (e.g. controller 108 of FIG. 1, microprocessor 238 of FIG. 2) of the mobile device. The computer program product which may embody this technique may include the computer readable medium having computer instructions stored therein, which are executable by the one or more processors for performing the technique.

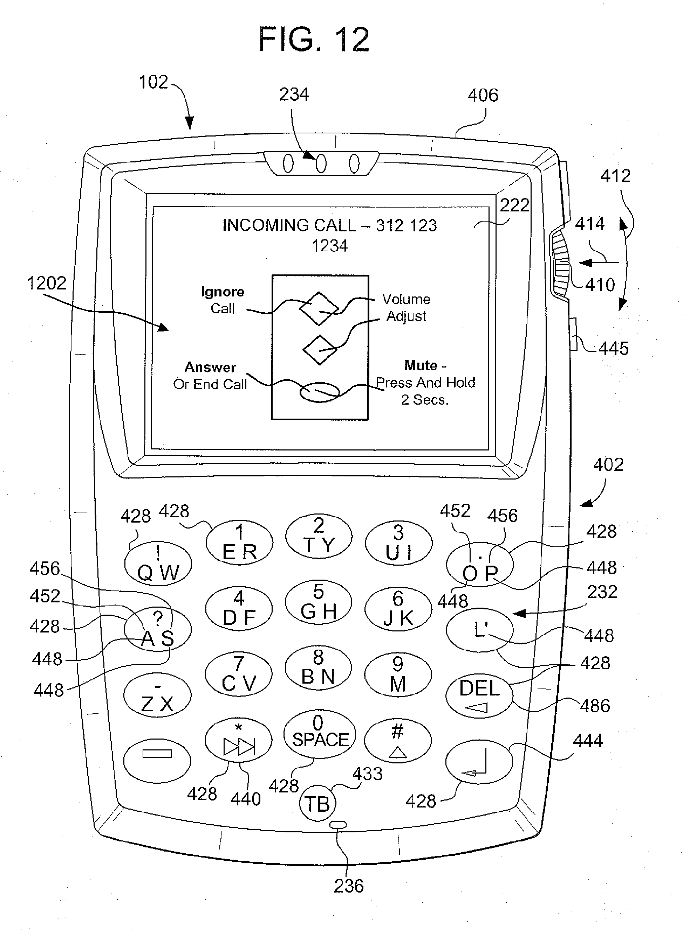

Beginning at a start block 1150 of FIG. 11, the mobile device monitors for or awaits a detection of one or more predetermined events at the mobile device (step 1152 of FIG. 11). If one of the predetermined events is detected as tested in step 1152, then the mobile device reads or selects UI instruction information corresponding to the type or model identification of the wireless peripheral device with which it is connected (step 1154 of FIG. 11). In step 1154, the mobile device may select a certain portion or subset of UI instruction information corresponding to the connected wireless peripheral device based on its identification of the current state of the mobile device. Next, the mobile device causes this UI instruction information to be output at the mobile device; e.g. the UI instruction information may rendered in the visual display (step 1156 of FIG. 11). As described earlier, other data forms may be utilized as well, such as recorded audible/voice data for audible/voice output at the speaker of the mobile device. Examples are illustrated in FIGs. 12-14 and described later below.

Note that the technique of FIG. 11 may be performed for each predetermined event that is detected by the mobile device. A predetermined event may be, for example, a connection or pairing being established with a wireless peripheral device (i.e. step 1024 of FIG. 10); any user actuation of any user input control of the wireless peripheral device; a user input request made via the user interface of the mobile device; an incoming call to the mobile device; a user's answering of an incoming call to the mobile device (or alternatively, a call being connected); a user input request to terminate a call; while the mobile device is engaged in a first call, receiving a second incoming call to the mobile device; any combinations of the above; etc.

In the examples of FIGs. 12-14, the mobile device is a handheld wireless telephone device, the wireless peripheral device is a wireless audio headset or earpiece, and the relevant functions are call control functions. However, any suitable combination of mobile device, wireless peripheral device, and associated functions may utilize the techniques of the present disclosure. For example, the wireless peripheral device 900 of FIG. 9 and functions associated therewith may be utilized in mobile device 102 (e.g. see FIGs. 1-5 above).

FIG. 12 is an illustration of mobile device 102 where UI instruction information 1202 is visually displayed in display 222 while connected or paired with wireless peripheral device 700 of FIGs. 7A-713. In FIG. 12, the predetermined event at mobile device 102 is an incoming voice call, occurring when mobile device 102 is connected or paired with wireless peripheral device 700. As shown, at least some of the user input controls of wireless peripheral 700, as well as the configuration or layout of the user input controls, are illustrated by the UI instruction information 1202. As apparent, names of functions associated with one or more user input controls relevant to the current state of mobile device 102 are provided. For example, the bottom input control for wireless peripheral device 700 is indicated with the function to "Answer" the call; the top input control is indicated with the function to "Ignore" the call; the top and middle input controls are indicated with the function for "Volume Adjust"; and the bottom input control is further indicated with the function to "End" the call which would apply later when the user answers the incoming call.

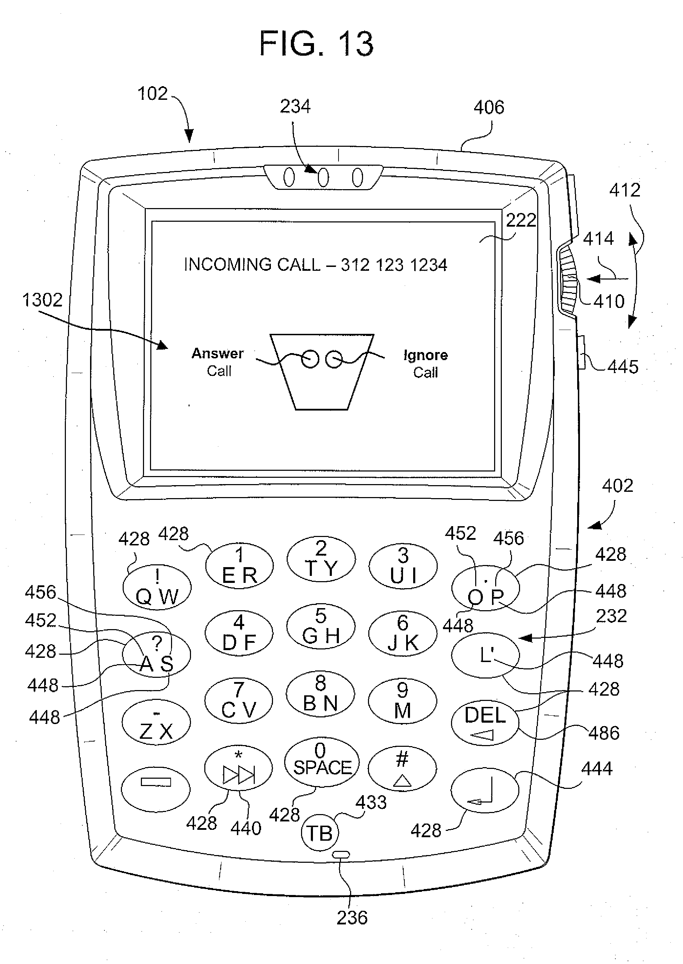

FIG. 13 is an illustration of mobile device 102 where UI instruction information 1202 is visually displayed in display 222 while connected or paired with wireless peripheral device 800 of FIGs. 8A-8B. Similar to FIG. 12, in FIG. 13 the predetermined event at mobile device 102 is an incoming voice call, occurring when mobile device 102 is connected or paired with wireless peripheral device 800. As shown, at least some of the user input controls of wireless peripheral 800, as well as the configuration or layout of these user input controls, are illustrated by the UI instruction information 1302. As apparent, names of functions associated with one or more user input controls relevant to the current state of mobile device 102 are provided. For example, the left user input control of wireless peripheral device 800 is indicated with the function to "Answer" the call, and the right user input control is indicated with the function to "Ignore" the call. Here, less UI instruction information than in FIG. 12 is utilized, which may be for clarity to the user of mobile device 102.

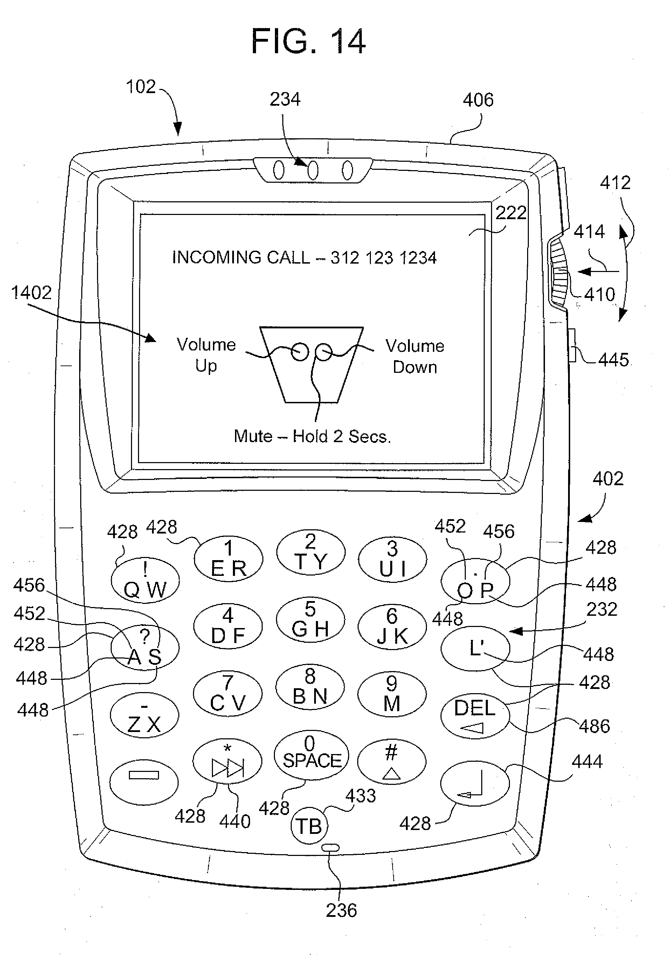

FIG. 14 is an illustration of mobile device 102 where user interface (UI) instruction information 1402 is visually displayed in display 222 while connected or paired with wireless peripheral device 800 of FIGs. 8A-8B. In FIG. 14, the predetermined event at mobile device 102 is a user answering of the incoming voice call, occurring when mobile device 102 is connected or paired with wireless peripheral device 800. As shown, mobile device 102 is connected in a voice call with another party. At least some of the user input controls of wireless peripheral device 800, as well as the configuration or layout of these user input controls, are illustrated with the UI instruction information 1402. As apparent, names of functions associated with one or more user input controls relevant to the current state of mobile device 102 are provided. The left and right input controls of wireless peripheral device 800 are indicated with the functions for "Volume Up" and "Volume Down", respectively. In addition, the right input control is indicated with the additional function for "Mute" (alternatively, "Hold") which is performed when pressing and holding the right input control for two (2) seconds.

As apparent from comparing FIGs. 13 and 14, different UI instruction information corresponding to the connected wireless peripheral may be selected and output depending on the current state of mobile device 102. Here, the state in FIG. 12 may be referred to as STATE: "Receiving Incoming Call, Not Connected"; whereas the state in FIG. 13 may be indicated as STATE: "Connected Call". Otherwise, mobile device 102 provides its home screen or ribbon screen in its display 222 (FIG. 4) (STATE: "Idle"), unless the user interacts with other applications of mobile device 102.

As another example relating to the connected call state illustrated in FIG. 14, mobile device 102 may receive another incoming call while maintaining the original call. Such a state may be referred to as STATE: "Connected Call, With Incoming Call". In response to detecting this predetermined event in such device state, mobile device 102 may cause other UI instruction information to be selected and visually displayed. This other UI instruction information indicates a first one of the user input controls (e.g. left input control) for both causing the first call to be held and the second call to be answered, and a second one of user input controls (e.g. right input control) for both causing the first call to be dropped and the second call to be answered.

Another example relates to the mobile device being able to selectively retrieve UI instruction information based on a setting in its memory for language (e.g. English, Spanish, French, German, etc.). In this case, the mobile device may send a request to the server with the identification of the type or model of the wireless peripheral device, as well as with the setting for language, so that the appropriate UI instruction information in the proper language (based on the language setting) may be selected and retrieved.

Thus as described, a mobile communication device (e.g. a handheld telephone device) has a first wireless transceiver for communications via a wireless communication network and a second wireless transceiver for communications with a wireless peripheral device (e.g. a BLUETOOTH audio headset or earpiece). The mobile device receives, from the wireless peripheral, an identification of a type or model of the wireless peripheral. The mobile device causes user interface (UI) function mapping information of the wireless peripheral to be selectively retrieved based on the received identification of the type or model. The UI function mapping information is indicative of a plurality of device functions assigned to a plurality of user input controls of the wireless peripheral. UI instruction information which is based on the retrieved UI function mapping information is then displayed at the mobile device. For example, when an incoming call is received, UI instruction information which identifies a first user input control for causing the incoming call to be answered and a second user input control for causing the incoming call to be ignored is displayed. The UI function mapping information may be selectively retrieved by sending, via the first wireless transceiver, a request which indicates the type or model of the wireless peripheral, for receipt by a server having different sets of UI function mapping information stored in association with a plurality of different types or models of wireless peripherals. The mobile device receives, from the server, the proper UI function mapping information in response to the request.

As illustrative herein, one mobile device of the present disclosure is a wireless telephony device where the UI function mapping information is or includes UI information for controlling voice calls of the device. Thus, another illustrative example relates to a method in a handheld wireless telephone device adapted to receive voice calls in a wireless communication network. The handheld wireless telephone device establishes, over a wireless link, a connection with a wireless audio peripheral device which includes a speaker and a microphone. The handheld wireless telephone device receives from the wireless audio peripheral device, an identification of a type or model of the wireless audio peripheral device. Then, the handheld wireless telephone device selectively retrieves user interface (UI) function mapping information of the wireless audio peripheral device based on the received identification of the type or the model. The UI function mapping information is indicative of a plurality of call control functions assigned to a plurality of user input controls of the wireless audio peripheral device. Thereafter, the handheld wireless telephone device causes UI instruction information which is based on the UI function mapping information to be visually displayed.

For example, the handheld wireless telephone device may receive an incoming call via the wireless network from another party. In response, the handheld wireless telephone device may cause certain UI instruction information to be selected and visually displayed. Here, the UI instruction information indicates to the user a first one of the user input controls for causing the incoming call to be answered, and indicates a second one of the user input controls for causing the incoming call to be ignored. If answered, for example, the handheld wireless telephone device will establish and maintain the call. While maintaining the call, however, the mobile device may receive an additional incoming call. In response, the mobile device may cause other UI instruction information to be selected and visually displayed. This other UI instruction information indicates a first one of the user input controls for both causing the first call to be held and the second call to be answered, and a second one of user input controls for both causing the first call to be dropped and the second call to be answered.

The above-described embodiments of the present disclosure are intended to be examples only. Those of skill in the art may affect alterations, modifications and variations to the particular embodiments without departing from the scope of the application. The invention described herein in the recited claims intends to cover and embrace all suitable changes in technology.

## Claims

1. A method in a wireless mobile communication device (618) adapted for communications in a wireless communication network (608), the method comprising the acts of:
establishing (1024), over a wireless link, a connection with a wireless peripheral device (620);
receiving (1026), from the wireless peripheral device (620), an identification of a type or model of the wireless peripheral device (620);
selectively retrieving (1028) user interface (UI) function mapping information of the wireless peripheral device (620) based on the received identification of the type or the model, the UI function mapping information being indicative of a plurality of device functions assigned to a plurality of user input controls of the wireless peripheral device (620); and
causing (1156) UI instruction information which is based on the UI function mapping information to be visually displayed at the wireless mobile communication device (618).

2. The method of claim 1, wherein the wireless mobile communication device (618) comprises a wireless telephony device, and the wireless peripheral device (620) comprises a wireless audio headset or earpiece or a wireless hands-free car unit.

3. The method of claim 1, wherein the wireless mobile communication device (618) comprises a wireless telephony device and the UI function mapping information comprises UI information for controlling voice calls of the wireless mobile communication device (618).

4. The method of claim 1, wherein the act of selectively retrieving (1028) comprises the further acts of:
causing a request to be sent, via the wireless communication network (104), to a server; and
receiving the UI function mapping information in response to sending the request.

5. The method of claim 1, wherein the act of selectively retrieving (1028) comprises the further acts of:
causing a request which indicates the type or model to be sent to a server via the wireless communication network (104), the server having different sets of UI function mapping information stored in association with a plurality of types or models of wireless peripheral devices; and
receiving the UI function mapping information in response to the request.

6. The method of claim 1, wherein the act of causing (1156) the UI instruction information to be visually displayed comprises causing the UI instruction information to be visually displayed in response to establishing the connection with the wireless peripheral device (620), upon receipt of the UI function mapping information of the wireless peripheral device (620).

7. The method of claim 1, further comprising the acts of:
receiving an incoming call at the wireless mobile communication device (618);
causing (1156) the UI instruction information to be visually displayed in response to receiving the incoming call; and
wherein the UI instruction information indicates one of the user input controls for causing the incoming call to be answered.

8. The method of claim 1, further comprising the acts of:
receiving an incoming call at the wireless mobile communication device (618);
causing the UI instruction information to be visually displayed in response to receiving the incoming call; and
wherein the UI instruction information indicates a first one of the user input controls for causing the incoming call to be answered, and indicates a second one of the user input controls for causing the incoming call to be ignored.

9. The method of claim 1, further comprising the acts of:
maintaining a first call at the wireless mobile communication device (618);
while maintaining the first call, receiving a second call at the wireless mobile communication device (618);
causing the UI instruction information to be visually displayed in response to receiving the second call; and
wherein the UI instruction information indicates a first one of the user input controls for both causing the first call to be held and the second call to be answered, and a second one of user input controls for both causing the first call to be dropped and the second call to be answered.

10. The method of claim 1, wherein the wireless peripheral device (620) is a first wireless peripheral device (700), the identification of the type or model is a first identification of a first type or first model, the plurality of user input controls is a first plurality of user input controls (704), the UI function information is first UI function information, the UI instruction information is first UI instruction information, and the plurality of functions is a first plurality of functions, the method comprising the further acts of:
establishing (1024) a connection with a second wireless peripheral device (800);
receiving (1026), from the second wireless peripheral device (800) over the connection, a second identification of a second type or second model of the second wireless peripheral device (800);
selectively retrieving (1028) second UI function information of the second wireless peripheral device (800) based on the received second identification of the second type or second model, the second UI function information being indicative of a second plurality of functions assigned to a second plurality of user input controls (804) of the second wireless peripheral device (800); and
causing (1156) second UI instruction information which is based on the second UI function information to be visually displayed at the wireless mobile communication device (618).

11. The method of claim 1, which is embodied as computer instructions stored in a computer readable medium and executable by one or more processors of the wireless mobile communication device (618).

12. A wireless mobile communication device (102), comprising:
one or more processors (106);
a first wireless transceiver (108a) coupled to the one or more processors (106);
a second wireless transceiver (108b) coupled to the one or more processors (106);
a visual display (112) coupled to the one or more processors (106);
the one or more processors (106) being adapted to:
operate the first wireless transceiver (108a) for communications via a wireless communication network (104);
operate the second wireless transceiver (108b) for communications with a wireless peripheral device (700);
receive (1026), from the wireless peripheral device (700) via the second wireless transceiver (108b), an identification of a type or model of the wireless peripheral device (700);
selectively retrieve (1028) user interface (UI) function mapping information of the wireless peripheral device (700) based on the received identification of the type or the model, the UI function mapping information being indicative of a plurality of device functions assigned to a plurality of user input controls (704) of the wireless peripheral device (700); and
causing (1156) UI instruction information which is based on the UI function mapping information to be displayed in the visual display (112).

13. The wireless mobile communication device (102) of claim 12, wherein the one or more processors (106) are adapted to selectively retrieve (1028) the UI function information by being further operative to:
cause a request to be transmitted, via the first transceiver (108a), to a server; and
receive, via the first transceiver (108a), the UI function mapping information in response to transmitting the request.

14. The wireless mobile communication device (102) of claim 12, wherein the one or more processors (106) are adapted to selectively retrieve (1028) the UI function mapping information by being further operative to:
cause a request which indicates the type or model to be transmitted to a server via the first transceiver (108a), the server having different sets of UI function mapping information stored in association with a plurality of types or models of wireless peripheral devices; and
receive, via the first transceiver, the UI function mapping information in response to the request.

15. A method of operating a handheld wireless telephone device (618) adapted to receive voice calls in a wireless communication network (608), the method comprising the acts of:
establishing (1024), over a wireless link, a connection with a wireless audio peripheral device (620) which includes a speaker and a microphone;
receiving (1026), from the wireless audio peripheral device (620), an identification of a type or model of the wireless audio peripheral device (620);
selectively retrieving (1028) user interface (UI) function mapping information of the wireless audio peripheral device (620) based on the received identification of the type or the model, the UI function mapping information being indicative of a plurality of call control functions assigned to a plurality of user input controls of the wireless audio peripheral device (620); and
causing (1156) UI instruction information which is based on the UI function mapping information to be visually displayed at the handheld wireless telephone device.
